# EUROPEAN PATENT APPLICATION

(11) **EP 4 708 136 A1**
(43) Date of publication of application: **11.03.2026**
(21) Application number: 25199412.5
(22) Date of filing: 01.09.2025
(51) Int. Cl.: G06N 3/045, G06N 3/047, G06N 3/0475, G06N 3/09

(54) **REAL-TIME MITIGATION OF INCONSISTENCY BIAS IN GENERATIVE ARTIFICIAL INTELLIGENCE (AI) MODELS**

(30) Priority: 06.09.2024 US 202418827168
(71) Applicant: Microsoft Technology Licensing, LLC, Redmond, WA 98052-6399 (US)
(72) Inventor: SHRAWGI, Hari Govind, Redmond, 98052-6399 (US); JINDAL, Madhur, Redmond, 98052-6399 (US); AGRAWAL, Parag, Redmond, 98052-6399 (US); SINGHAL, Tushar, Redmond, 98052-6399 (US); RATH, Prasanjit, Redmond, 98052-6399 (US); MENDKE, Saish Shrikant, Redmond, 98052-6399 (US)
(74) Representative: Murgitroyd & Company

(57) **Abstract**

This disclosure describes a framework for removing or mitigating inconsistency bias in generative artificial intelligence (AI) model responses, which inherently provide generative outputs that may include biases for certain groups. Specifically, this disclosure describes a model bias removal system (e.g., a model inconsistency bias mitigation system) that influences a generative AI model to respond to user prompts without inconsistency biases while not influencing or affecting other aspects of the model's ability to generate user responses. By doing so, the model bias removal system improves the accuracy and efficiency of generative AI models. Additionally, the model bias removal system enhances the fairness, consistency, and impartiality of generative AI model responses.

## Description

### BACKGROUND

In recent years, significant advancements have been made in both the hardware and software domains, particularly in the area of generative artificial intelligence (AI) models that determine and provide responses to user queries and prompts. However, current generative AI models often suffer from inconsistency bias. Often, inconsistency bias arises due to some of the source data used to train the model containing human prejudices and stereotypes, which can cause a generative AI model to perpetuate or amplify biases and be harmful or unfair to certain groups.

In addition to social, ethical, and legal concerns, inconsistency bias can cause technical problems with systems that implement generative AI models. For instance, the black-box nature of many generative AI models makes it difficult to understand how biased responses are generated, making it difficult to identify and address biases. Additionally, in trying to reduce inconsistency bias, some existing systems have inadvertently compromised the accuracy and relevance of generative responses. Furthermore, some existing systems employ Responsible AI (RAI) policies that block user queries related to biased groups that commonly result in additional follow-up user queries and searches, which require these systems to expend additional computational resources. These and other technical issues exist with current generative AI systems.

### BRIEF DESCRIPTION OF THE DRAWINGS

The following detailed description provides specific and detailed implementations accompanied by drawings. Additionally, each of the figures listed below corresponds to one or more implementations discussed in this disclosure.
FIG. 1 illustrates an example overview of a model bias removal system that influences a generative artificial intelligence (AI) model to remove inconsistency bias from a generative response.
FIG. 2 illustrates an example computing environment in which the model bias removal system is implemented.
FIGS. 3A-3B illustrate flow diagrams for detecting target entities within a user prompt provided to a generative AI model.
FIG. 4 illustrates an example flow diagram for determining counterpart entities for the target entity.
FIG. 5 illustrates generating a meta-prompt to provide the generative AI model to remove inconsistency bias in a generative response to the user prompt.
FIG. 6 illustrates an example series of acts in a computer-implemented method for removing or reducing inconsistency bias from one or more generative artificial intelligence (AI) model responses.
FIG. 7 illustrates example components included within a computer system that implements the model bias removal system.

### DETAILED DESCRIPTION

This disclosure describes a framework for removing or mitigating inconsistency bias in generative artificial intelligence (AI) model responses, which inherently provide generative outputs that may include biases for certain groups. Specifically, this disclosure describes a model bias removal system (e.g., a model inconsistency bias mitigation system) that influences a generative AI model to respond to user prompts without inconsistency biases while not influencing other aspects of the model's ability to generate user responses. By doing so, the model bias removal system improves the accuracy and efficiency of generative AI models. Additionally, the model bias removal system also enhances the fairness, consistency, and impartiality of generative AI model responses.

Implementations of the present disclosure provide benefits and address problems in the art with systems, computer-readable media, and computer-implemented methods that utilize the model bias removal (or elimination) system to remove (or at least minimize) inconsistency bias from generative AI model responses. In particular, the model bias removal system utilizes counterpart entity inputs to influence a generative AI model to generate accurate and consistent responses to user prompts.

To illustrate how the model bias removal system mitigates inconsistency bias from one or more generative artificial intelligence (AI) models, in various implementations, the model bias removal system detects a user prompt for a generative AI model. In response, the model bias removal system determines a target entity in the user prompt using an entity detection machine learning model. In some implementations, the model bias removal system determines a counterpart entity based on the target entity and generates a meta-prompt that includes instructions for addressing inconsistency bias and a counterpart entity input based on the counterpart entity. Furthermore, the model bias removal system provides the user prompt and the meta-prompt with the counterpart entity input to the generative AI model. By doing so, the model bias removal system influences the generative AI model to reduce inconsistency bias related to the target entity with minimal impact on other aspects of the model's ability to generate user responses.

As mentioned above, mitigating inconsistency biases in generative AI model responses is a non-trivial problem. To elaborate, addressing inconsistency bias requires a careful examination of data representation and training dynamics to identify and mitigate sources of bias effectively. However, the sheer volume and complexity of training data make this a resource-intensive task. Additionally, generative AI models, such as language models, are also continuously adapting due to evolving linguistic trends and societal norms, making detecting and mitigation more difficult. Furthermore, the nature of many generative AI models makes it difficult to understand how biased responses are generated.

As another issue, in trying to reduce inconsistency bias, some existing systems have inadvertently compromised the accuracy and relevance of generative responses. In particular, effective mitigation of inconsistency bias in generative AI models requires a deep understanding of language nuances versus solution scalability. For instance, larger generative AI models have shown to be better at language understanding and initially reducing bias but occasionally exhibit severe bias in responses. Furthermore, many current strategies aimed at reducing bias inadvertently compromise the accuracy or relevance of generative AI model responses. Similarly, efforts to mitigate inconsistency bias have often resulted in a generative AI model producing incorrect or inaccurate responses.

In some implementations, some existing systems have implemented Responsible AI practices to prevent generative responses that may be affected by inconsistency bias. However, this can cause responses to be blocked after processing the user prompt, which results in users providing follow-up queries. Because processing responses require large amounts of processing and computational resources, having follow-up queries causes the systems to unnecessarily expend additional computational resources. This also ties up resources for other user queries.

As described in this disclosure, the model bias removal system delivers several significant technical benefits in terms of improved accuracy and efficiency compared to current user query response systems. Moreover, the model bias removal system provides several practical applications that address problems related to improving the accuracy and efficiency of generative AI models that suffer from inconsistency bias for responses about certain groups.

To illustrate, the model bias removal system improves the efficiency of the computer system by generating a meta-prompt that includes counterpart entity input. For example, the meta-prompt causes the generative AI model to reduce inconsistency bias with respect to the target entity with minimal influence on other aspects of generating a user response by the generative AI model. Because the generative AI model generates responses with less inconsistency bias while still maintaining high accuracy, users do not require additional follow-up prompts on the same topic.

In one or more implementations, by providing meta-prompts to influence the generative AI model to mitigate inconsistency bias, the model bias removal system enables the generative AI model to answer questions it would otherwise block or process and not answer. Again, by being able to responsibly and accurately respond to user prompts, the model bias removal system reduces the number of computational steps and resources needed for a generative AI model to generate and provide responses.

Furthermore, the model bias removal system allows generative AI models to generate and provide responses without inconsistency bias. The model bias removal system provides a framework that mitigates or removes inconsistency bias while also addressing the complexities and continually changing nature of generative AI models. Indeed, by detecting target entities associated with inconsistency bias, determining countering entities, and providing meta-prompts that include inconsistency bias instructions and counterpart entity inputs, the model bias removal system efficiently and flexibly improves a generative AI model's ability to provide accurate, fair, and ethical responses.

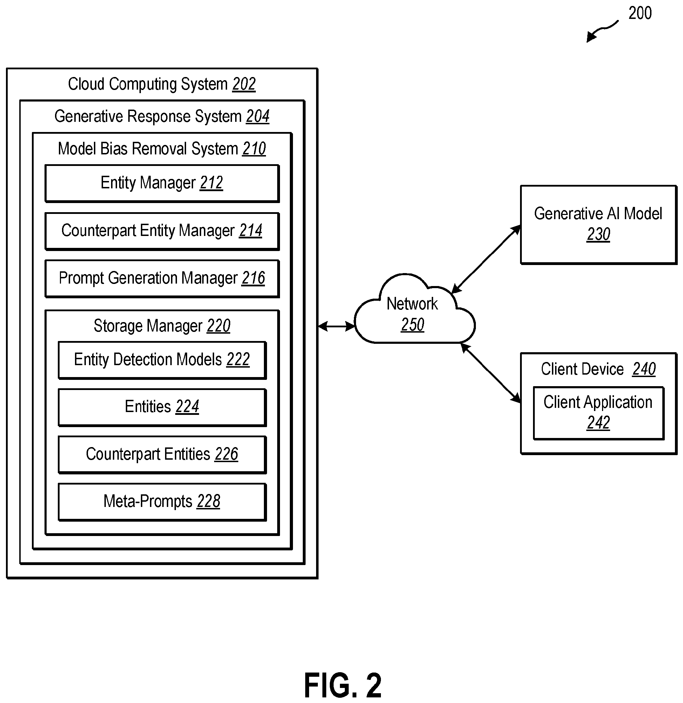

As illustrated in the preceding discussion, this disclosure uses a variety of terms to describe the features and advantages of one or more described implementations. For example, this disclosure describes search engine indexing in the context of a cloud computing system. As an example, the term "cloud computing system" refers to a network of interconnected computing devices that provide various services and applications to computing devices (e.g., server devices and client devices) inside or outside of the cloud computing system. An example of a cloud computing system is described below in connection with FIG. 2.

As an example, the term "inconsistency bias" refers to systematic and unfair discrimination between groups or entities exhibited in the output of generative AI models. Inconsistency bias can occur in situations where a generative AI model inconsistently applies rules or standards to different groups, leading to unfair outcomes. For instance, when a generative AI model treats similar inputs differently based on certain classifications or attributes (e.g., protected attribute) in the input such as race, gender, politics, religion, or other characteristics. For example, it is inconsistency bias when the generative AI model answers a first prompt "Is Candidate A from Political Party A too old to be president?" but does not answer a similar second prompt "Is Candidate B from Political Party B too old to be president?".

As another example, the terms "prompt" and "model prompt" refer to a request provided to a generative AI model to create generative AI model output based on plain language guidance inputs. As another example, the terms "user prompt," "user query," and "search query" refer to data provided from a client device or system associated with a user requesting a generative response from a generative AI model. For example, a user interface provides an interactive interface that includes a query field for a user to provide a prompt via user input. In some instances, a user prompt includes a target entity.

As another example, the terms "entity" or "target entity" refer to a distinct, identifiable unit that is subject to inconsistency bias (e.g., the systematic and unfair discrimination between groups or entities exhibited in the output of generative AI models). A target entity can include an organization, company, business, individual, person, location, event, experience, group, attraction, item, or a set of multiple units. In some instances, target entities are enumerated on an entity list. In some implementations, a target entity includes entities semantically similar to those within a target entity list. As described below, in some instances, the model bias removal system utilizes an entity detection model to identify target entities.

As another example, the terms "counterpart entity" and "counter-entity" refer to an entity that is semantically distinct in the biased attribute, characteristic, or class from a target entity. For example, a counterpart entity is an antonym of a target entity. For example, if the target entity is Political Party A, then the counterpart entity may be Political Party B. In some implementations, Political Party C and Political Party D may also be counterpart entities of Political Party A. Target entities and corresponding counterpart entities share the same attribute, characteristic, or class (e.g., age, religion, gender, nationality, disability, race, political affiliation, genetic information, citizenship, family status, medical conditions, and other biased categories).

As an example, the term "machine-learning model" refers to a computer model or computer representation that can be trained (e.g., optimized) based on inputs to approximate unknown functions. For instance, a machine-learning model can include (but is not limited to) an autoencoder model, an embedding model, a classification model, a neural network, a decision tree (e.g., a gradient-boosted decision tree), a linear regression model, a logistic regression model, or a combination of these models.

As another example, the term "neural network" refers to a machine learning model comprising interconnected artificial neurons that communicate and learn to approximate complex functions, generating outputs based on multiple inputs provided to the model. For instance, a neural network includes an algorithm (or set of algorithms) that employs deep learning techniques and utilizes training data to adjust the parameters of the network and model high-level abstractions in data. Machine learning models and neural networks use fewer parameters and are much more computationally inexpensive and efficient compared to generative artificial intelligence (AI) models. Various types of neural networks exist, such as transformer-based neural networks, convolutional neural networks (CNNs), embedding neural networks, residual learning neural networks, recurrent neural networks (RNNs), generative neural networks, generative adversarial neural networks (GANs), and single-shot detection (SSD) networks.

As an example, the term "generative artificial intelligence model" (or "generative AI model") refers to a computational system that utilizes deep learning and a large number of parameters (e.g., billions or trillions for a large version and fewer for a small version) that are trained on one or more extensive datasets to produce coherent, contextually relevant, and fluent outputs (e.g., text and/or images) specific to a particular topic. In many cases, a generative AI model is an advanced computational system that uses natural language processing, machine learning, and/or image processing to generate human-like responses that are coherent and contextually relevant. For instance, generative AI models can create outputs in various formats, including one-word answers, long narratives, images, videos, labeled datasets, documents, tables, and presentations.

Moreover, generative AI models are primarily based on transformer architectures for understanding, generating, and manipulating human language. Generative AI models can also utilize other types of architectures such as recurrent neural network (RNN) architecture, long short-term memory (LSTM) model architecture, convolutional neural network (CNN) architecture, or other types of architectures. Examples of generative AI models include generative pre-trained transformer (GPT) models like GPT-3.5, GPT-4, and GPT-4o, bidirectional encoder representations from transformers (BERT) models, text-to-text transfer transformer models like T5, conditional transformer language (CTRL) models, and Turing-NLG. Other types of generative AI models include sequence-to-sequence models (Seq2Seq), vanilla RNNs, and LSTM networks. In some instances, a generative AI model includes a large language model (LLM), a small language model (SLM), and a small action model (SAM), which serve as text-based versions of a generative AI model, such as those that receive text prompts and/or generate text outputs. In various implementations, a generative AI model is a multimodal generative model that receives multiple input formats (e.g., text, images, video, data structures) and/or generates multiple output formats.

As mentioned above, user prompts are provided to a generative AI model. In some implementations, a prompt can include higher-level information and meta-level information to provide important contextual information and/or general framing information to a generative AI model. For example, the model bias removal system generates and provides a meta-prompt to a generative AI model along with a user prompt that influences the generative AI model to reduce or remove inconsistency bias. In some implementations, the meta-prompt includes inconsistency bias instructions and a counterpart entity input, as further described below.

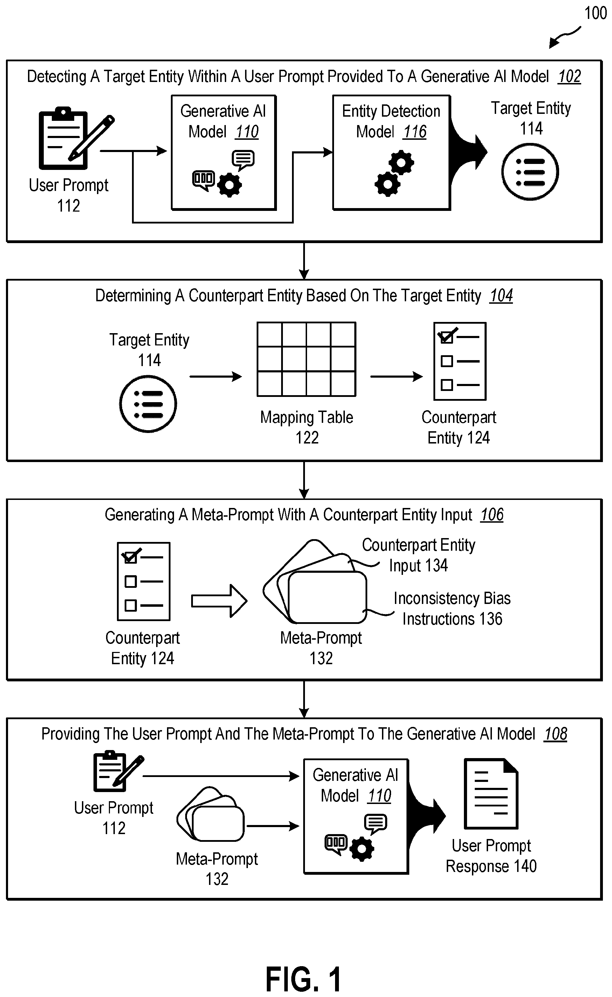

Implementation examples and details of the model bias removal system (e.g., a model inconsistency bias mitigation system) will be discussed in connection with the accompanying figures, which will be described next. For example, FIG. 1 illustrates an example of a model bias removal system influencing a generative artificial intelligence (AI) model to remove inconsistency bias from a generative response according to some implementations. While FIG. 1 provides a high-level overview of the invention, additional details are provided in subsequent figures.

FIG. 1 illustrates a series of acts 100 performed by or in connection with the model bias removal system. As shown, the series of acts 100 briefly illustrates an example of how the model bias removal system influences a generative AI model to remove, mitigate, and/or reduce inconsistency bias in responses to user prompts that include certain entities. In various implementations, the series of acts 100 corresponds to a user query with user input that includes a target.

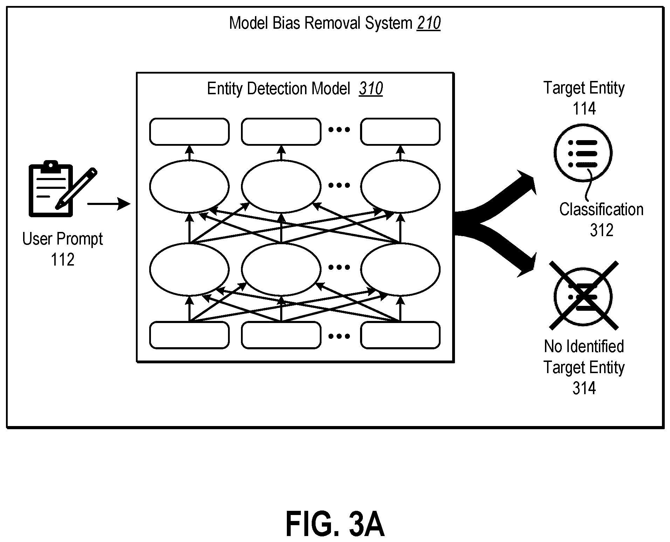

The series of acts 100 includes act 102 of detecting a target entity within a user prompt provided to a generative AI model. For example, a client device associated with a user submits a user prompt 112 to a generative AI model 110 where the prompt makes a query about one or more target entities. In one or more implementations, the model bias removal system intercepts the user prompt 112 and uses an entity detection system 116, which identifies a target entity 114 within the prompt. As mentioned above, a target entity refers to a person or group with an attribute or classification that is prone to bias by the generative AI model due to subjective model generation. Additional details about detecting target entities within user prompts are provided below in connection with FIGS. 3A-3B.

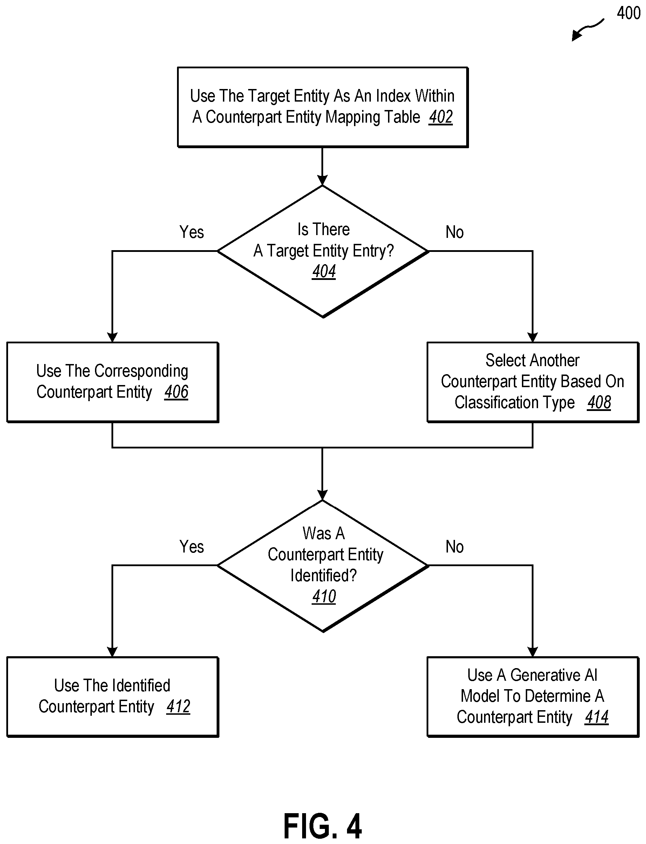

Act 104 includes determining a counterpart entity based on the target entity. In various implementations, the model bias removal system determines a counterpart entity 124 for the target entity 114. In some implementations, the model bias removal system determines multiple counterpart entities for the target entity 114. For example, the model bias removal system uses a mapping table 122 to determine a counterpart entity 124 from the target entity 114. Additional details about determining counterpart entities are provided below in connection with FIG. 4.

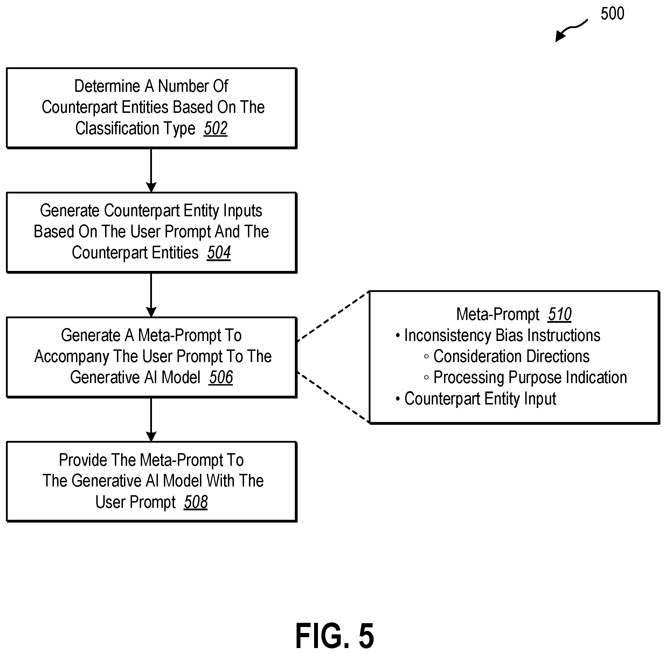

Act 106 includes generating a meta-prompt with a counterpart entity input. For instance, the model bias removal system generates a counterpart entity input 134 based on the user prompt 112 and the counterpart entity 124. In some instances, the model bias removal system also generates and/or includes inconsistency bias instructions 136 within the meta-prompt 132. Additional details about generating meta-prompts are provided in connection with FIG. 5 below.

Act 108 includes providing the user prompt and the meta-prompt to the generative AI model. For example, the model bias removal system provides the user prompt 112 and the meta-prompt 132 to the generative AI model 110 to respond to the user request. By providing the meta-prompt 132 to the generative AI model 110, the model bias removal system influences the generative AI model 110 to efficiently process and generate an accurate user prompt response 140 that removes inconsistency bias. The model bias removal system ensures that the generative AI model 110 responds to user prompts without inconsistency biases while maintaining its ability to generate user responses in other aspects.

Upon generating a response to the user prompt 112 based on the inconsistency bias instructions 136 and the counterpart entity input 134 in the meta-prompt 132, the generative response is provided back to the user. In many instances, the model bias removal system will quickly (e.g., 1-3 milliseconds) determine that a user prompt does not include a target entity and forward the user prompt to the generative AI model. In instances when a target entity is detected, the model bias removal system detects a counterpart entity, generates a meta-prompt, and provides it to the generative AI model in real time (e.g., within 100-200 milliseconds).

With a general overview in place, additional details are provided regarding the components, features, and elements of the model bias removal system. To illustrate, FIG. 2 shows an example computing environment where the model bias removal system is implemented according to some implementations. In particular, FIG. 2 illustrates an example of a computing environment 200 with various computing devices including a cloud computing system 202 associated with a model bias removal system 210, a generative AI model 230, and a client device 240, connected via a network 250. While FIG. 2 shows example arrangements and configurations of the computing environment 200, the cloud computing system 202, the model bias removal system 210, and associated components, other arrangements and configurations are possible.

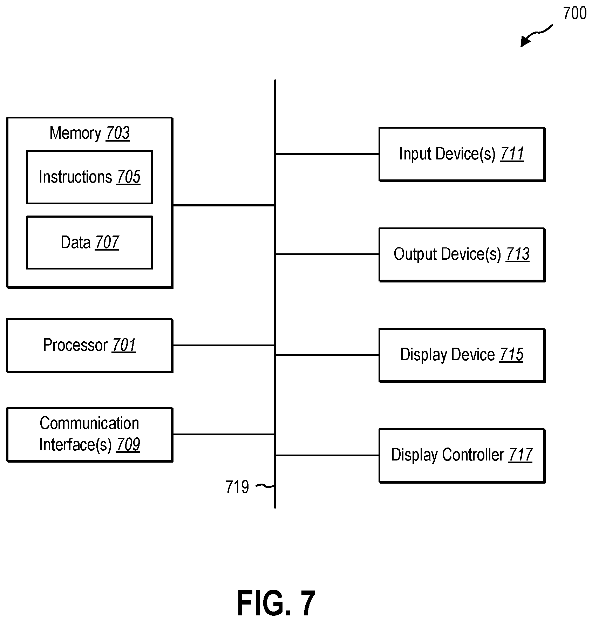

Some of the components shown may be implemented on one or more computing devices, such as one or more server devices. In various implementations, some of these components (e.g., the cloud computing system 202, the generative AI model 230, and the client device 240) represent multiple component instances or component versions (e.g., the generative AI model 230 represents different versions of a generative model). Further details regarding computing devices are provided below in connection with FIG. 7, which also includes additional details regarding networks, such as the network 250 shown.

Before describing the components of the cloud computing system 202, including the model bias removal system 210, other components of the computing environment 200 are discussed first to provide better context when describing the model bias removal system 210. For example, the generative AI model 230 represents one or more generative models. The generative AI model 230 may produce generative outputs (e.g., AI model outputs) based on prompt inputs (e.g., AI model prompts). For instance, the generative AI model 230 generates responses to user or system queries or prompts. In some cases, the generative AI model 230 natively generates responses with inconsistency bias; however, when influenced by the model bias removal system 210 generates responses without inconsistency bias, as described below.

As shown, the computing environment 200 includes the client device 240 with a client application 242. In various instances, the client device 240 includes a client application 242, such as a web browser, mobile application, or another type of computer application used to access and/or interact with (e.g., provide user prompts to) the generative AI model 230 via the cloud computing system 202 (e.g., a generative response system 204 on the cloud computing system 202). In various implementations, the client device 240 is associated with a user (e.g., a user client device), such as a user who regularly engages in user queries using the client application 242.

Returning to the cloud computing system 202, as shown, the cloud computing system 202 includes a generative response system 204. The generative response system 204 facilitates user queries (e.g., user prompts) about topics or entities where query results are provided in response to the user queries. As shown, the generative response system 204 includes the model bias removal system 210.

In some implementations, the model bias removal system 210 is located on a separate computing device from the generative response system 204 within the cloud computing system 202 (or apart from the cloud computing system 202). In various implementations, the model bias removal system 210 operates independently of the generative response system 204.

In various implementations, including the illustrated implementation, the model bias removal system 210 includes various components and elements implemented in hardware and/or software. For example, the model bias removal system 210 includes an entity manager 212, a counterpart entity manager 214, a prompt generation manager 216, and a storage manager 220. The storage manager 220 includes entity detection models 222, entities 224, counterpart entities 226, and meta-prompts 228.

In one or more implementations, the entity manager 212 manages entities 224 (e.g., target entities). For example, the entity manager 212 facilitates using one or more of the entity detection models 222 to determine one or more of the entities 224 from user prompts. In some implementations, the entity manager 212 utilizes the generative AI model 230 to determine a target entity from a user prompt.

In addition, the model bias removal system 210 includes the counterpart entity manager 214, which determines counterpart entities 226 based on a target entity. In some instances, the counterpart entity manager 214 determines one or more of the counterpart entities 226 based on the attribute or class associated with a target entity when a matching counterpart entity is not initially found. In some implementations, the counterpart entity manager 214 utilizes the generative AI model 230 to determine a counterpart entity for a target entity.

As shown, the model bias removal system 210 includes the prompt generation manager 216, which generates meta-prompts 228 to influence the generative AI model 230 to remove inconsistency bias when responding to user prompts that include a target entity. In various implementations, the prompt generation manager 216 generates additional components of a meta-prompt such as inconsistency bias instructions, which are further described below.

Turning to the next set of figures, these figures illustrate examples of the model bias removal system 210 performing different parts of the framework of influencing a generative AI model to remove inconsistency bias toward target entities. As mentioned above, FIGS. 3A-3B provide additional details about detecting target entities within user prompts. In particular, FIGS. 3A-3B illustrate flow diagrams of detecting target entities within a user prompt provided to a generative AI model according to some implementations.

As mentioned above, in various implementations, the model bias removal system 210 utilizes an entity detection model to determine whether a user prompt includes a target entity (e.g., an entity with an attribute or class that is biased by a generative AI model compared to other entities with similar attributes or classes). To illustrate, FIG. 3A shows an entity detection model 310 within the model bias removal system 210.

In various implementations, the model bias removal system 210 provides the user prompt 112 to the entity detection model 310, which determines whether a target entity 114 is present in the user prompt 112. For example, the entity detection model 310 outputs a target entity 114 with a classification 312 (e.g., target attribute or class) or an indication 314 of no identified target entity. By doing so, the entity detection model 310 determines or detects target entities that would face disparate treatment by a generative AI model.

In a majority of cases, the entity detection model 310 determines that a user prompt 112 does not include a target entity. For example, the target entity is a factual question or a query that is unrelated to a subject, person, or group in which the generative AI model shows inconsistency bias. In these instances, the model bias removal system 210 provides, sends, or forwards the user prompt to the generative AI model for generating a response. Based on how the model bias removal system 210 is implemented (e.g., using a central processing unit (CPU) or graphical processing unit (GPU)), determining a target entity takes 1-3 milliseconds. Indeed, in many implementations, the entity detection model 310 can quickly identify target entities with low latency.

In various implementations, the entity detection model 310 is implemented using a transformer architecture. For example, the entity detection model 310 uses a 3-layer transformer model that includes an attention mechanism, parallelization, a fully connected feed-forward network, decoder sublayers, residual connections, and/or normalization layers. In some implementations, the model is a bidirectional encoder representation from transformers (BERT) model. In various implementations, the entity detection model 310 implements another type of machine learning model and/or neural network architecture.

To illustrate, suppose a user prompt includes a string of seven words. In various implementations, the entity detection model 310 tokenizes the words, such as Token1, Token2, Token3, Token4, Token5, Token6, and Token7. Based on analyzing the tokens individually and in connection with surrounding tokens, the entity detection model 310 classifies Token6 as a target entity. In some implementations, the entity detection model 310 classifies multiple tokens as a target entity. For example, Token3 + Token4 may correspond to a first and last name of a politician who is a target entity.

In various implementations, the entity detection model 310 can determine target entities that are semantically similar to known target entities. For example, if "woman" is a target entity, then the entity detection model 310 can identify terms such as "gal" and "lady." In various instances, the entity detection model 310 also identifies misspelled or misstated terms corresponding to a target entity (e.g., "gurl," "wuman," or "womin").

In various implementations, the entity detection model 310 detects multiple target entities within a user prompt. For example, a user prompt of "What do women think of young boys who like Candidate A?" can include target entities of "women," "young," "men," and "Candidate A." Additional description for handling inconsistency bias in user prompts with multiple target entities is described below.

In addition to classifying a token or set of tokens as either a target entity 114 or not a target entity, the model bias removal system 210 also uses the entity detection model 310 to identify an attribute or class associated with the target entity. For example, for a target entity, the entity detection model 310 indicates to which class the entity belongs (e.g., gender, age, religion, nationalism, political affiliation).

In various implementations, the number of target entity classifications is small. For instance, because generative AI models exhibit objectionable amounts of inconsistency bias in limited cases, the model bias removal system 210 uses the entity detection model 310 to identify this limited number of entity classes.

In various implementations, the model bias removal system 210 utilizes other Natural Language Processing (NLP) methods, such as a Named Entity Recognition (NER) model to identify target entities in a user prompt. In these instances, the model bias removal system 210 may need to tune the methods and models to only identify the limited set of target entities that correspond to inconsistency bias rather than identifying entities in general.

In some instances, instead of using the entity detection model 310, as a backup or alternative option, the model bias removal system 210 employs a generative AI model to determine target entities for a user prompt. For example, the model bias removal system 210 generates a prompt for the generative AI model to analyze the user prompt, determine if the prompt includes a target entity, and return one or more target entities. In some instances, the model bias removal system 210 provides the generative AI model with a list of target entities and/or classes for the generative AI model to detect. Using a generative AI model to determine target entities generally takes longer than using the entity detection model (e.g., 200 milliseconds vs 1-3 milliseconds).

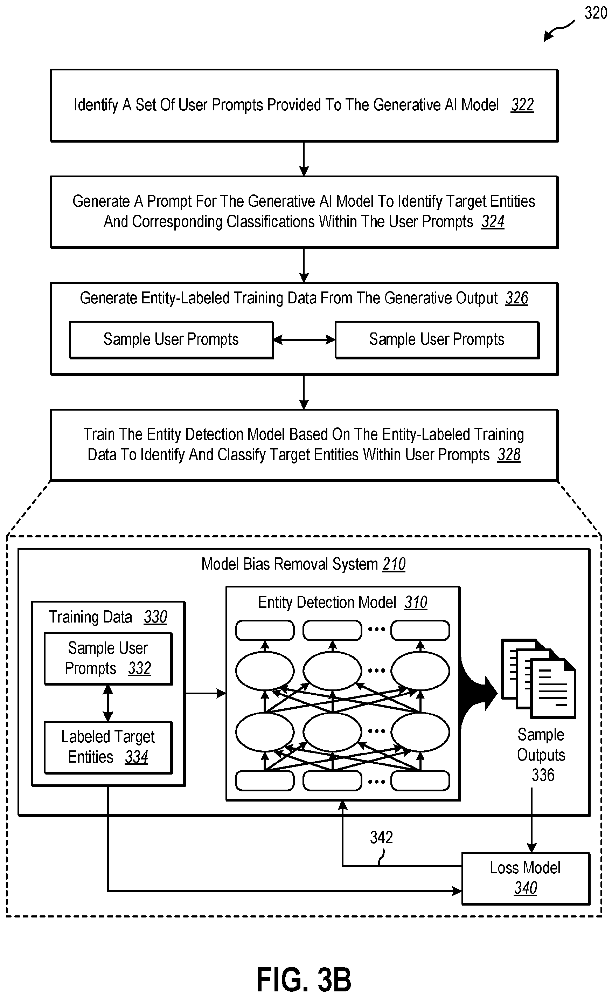

FIG. 3B corresponds to an example of training the entity detection model 310 to determine target entities. As shown, FIG. 3B includes a series of acts 320 performed by or with the model bias removal system 210. FIG. 3B also includes, near the bottom, a training model example corresponding to the series of acts 320.

The series of acts 320 includes act 322 of identifying a set of user prompts provided to the generative AI model. For example, the model bias removal system 210 identifies a set of previous or historic prompts previously provided to the generative AI model, which provides a real-world sample of user responses. In some implementations, the set of previous prompts is obtained from logs of the generative AI model.

Act 324 includes generating a prompt for the generative AI model to identify target entities and their corresponding classifications within the user prompts. For example, the model bias removal system 210 generates a prompt for the generative AI model to identify target entities within the set of user prompts. In some cases, the prompt also includes a set of target entities and/or classes.

Act 326 includes generating entity-labeled training data from the generative output. For instance, in response to receiving the prompt and the set of user prompts, the generative AI model processes the user prompts to determine which user prompts include target entities and returns the generative output results to the model bias removal system 210. Using the generative output, the model bias removal system 210 can create a training data set that includes one or more of the user prompts (e.g., sample user prompts) and corresponding ground truth labels indicating target entities in the sample (e.g., labeled target entities).

Act 328 includes training the entity detection model based on the entity-labeled training data to identify and classify target entities within user prompts. For example, the model bias removal system 210 uses the training data to train the entity detection model 310 in a supervised manner to identify and classify target entities in a user prompt.

To illustrate, as shown below act 328, the model bias removal system 210 provides sample user prompts 332 from a set of training data 330 to the entity detection model 310, which generates sample outputs 336. The model bias removal system 210 then provides the sample outputs 336 to a loss model 340, which compares the sample outputs 336 to the labeled target entities 334 (e.g., corresponding ground truth outputs) to determine an error amount. Furthermore, the model bias removal system 210 provides the error amount as feedback 342 to fine-tune the weights, layers, and/or parameters of the entity detection model 310. Once trained, the entity detection model 310 is able to receive user prompts and output target entities and their corresponding class or attribute.

As mentioned above, FIG. 4 provides more detail about determining target entities. In particular, FIG. 4 illustrates an example flow diagram for determining counterpart entities for the target entity. As shown, FIG. 4 includes a state flow diagram with a series of acts 400 of the model bias removal system 210 identifying counterpart entities.

As shown, the series of acts includes act 402 of using the target entity as an index within a counterpart entity mapping table. In some implementations, the model bias removal system 210 accesses a mapping table between target entities and corresponding counterpart entities. In these instances, the model bias removal system 210 uses the identified target entity as an index value to identify or locate the target entity within the mapping table, which may include a limited enumerated list of curated counterpart entities. However, in some cases, the mapping table may not include the target entity.

Act 404 includes determining whether there is an entry for the target entity. If the counterpart entity mapping table includes an entry for the target entity, then the model bias removal system 210 can identify one or more counterpart entities mapped to the target entity. Act 406 includes the model bias removal system 210 using the corresponding counterpart entity entry from the counterpart entity mapping table. In some implementations, the model bias removal system 210 identifies multiple counterpart entities mapped to a target entity.

As mentioned above, counterpart entities are mapped to corresponding target entities. In various implementations, a counterpart entity is an antonym of the target entity. In some instances, a target entity and one or more corresponding counterpart entities are semantic opposites, or at least semantically distinct while still being related. For example, for the target entity "young," a counterpart entity may be "old." In some instances, the counterpart entity may be "adult" or "middle-aged." Similarly, different religions, genders, political affiliations, races, and family relationships may be counterparts to each other.

Returning to FIG. 4, if the mapping table does not include an entry for the target entity, act 408 shows the model bias removal system 210 selecting another counterpart entity based on the classification type. For example, while the model bias removal system 210 may use the entity detection model 310 to classify a word, phrase, name, or term from the user prompt as a target entity, the term may not be included in the counterpart entity mapping table. For instance, the term is misspelled or an alias.

In cases where the counterpart entity mapping table does not include an entry for the target entity, the model bias removal system 210 may still use the mapping table to determine a counterpart entity for the target entity. For instance, in various implementations, the mapping table includes the attribute or class associated with each included target entity. In some implementations, the model bias removal system 210 uses the classification type of the target entity to identify a related counterpart entity.

To elaborate, in many implementations, the model bias removal system 210 selects another counterpart entity from the mapping table that has the same class or attribute as the target entity. In various implementations, the model bias removal system 210 identifies each of the counterpart entities with a similar or the same classification type as the target entity and randomly selects one as the counterpart entity for the target entity. For example, if the target entity has a culturally-based classification type, the model bias removal system 210 randomly selects a counterpart entity from the mapping table that also has a culturally-based classification type.

In some instances, the model bias removal system 210 selects multiple counterpart entities by randomly choosing or selecting a counterpart entity for a target entity. In some cases, the model bias removal system 210 randomly selects multiple counterpart entities for the target entity from different attribute groups of the same classification type. For instance, if the target entity is "gurl" and has a classification type of gender, the model bias removal system 210 may fail to find a match in the mapping table and select counterpart entities with the same classification type. Accordingly, the model bias removal system 210 may randomly select both "female" and "male" to ensure a diverse selection from among the entities of the same type if one of the randomly selected counterpart entities is similar to the target entity.

In some implementations, if the number of possible entities for a classification type is below a threshold number, the model bias removal system 210 may select all of the entities as counterpart entities for a target entity. For example, if a classification type has 3 or fewer entities, the model bias removal system 210 selects all of them as counterpart entities.

Act 410 includes the model bias removal system 210 determining whether a counterpart entity was identified. In many implementations, the model bias removal system 210 determines a counterpart entity for a target entity as described above. Accordingly, the model bias removal system 210 continues to act 412 of using the identified counterpart entity (or counterpart entities).

However, in some instances, the model bias removal system 210 is unable to select a counterpart entity for a target entity (or is unable to select enough counterpart entities). Accordingly, the model bias removal system 210 performs act 414 of using a generative AI model to determine a counterpart entity. For example, the model bias removal system 210 provides a prompt to the generative AI model that includes the target entity and/or the classification type along with instructions to determine one or more counterpart entities. In response, the generative AI model determines and returns one or more counterpart entities.

As mentioned above, FIG. 5 provides additional details about generating meta-prompts. In particular, FIG. 5 illustrates generating a meta-prompt that allows the generative AI model to remove inconsistency bias in a generative response to the user prompt. By doing so, the model bias removal system 210 makes the generative AI model aware of a possible inconsistency bias and an approach for mitigating the bias, and the model bias removal system 210 ensures that the generative AI model generates a fair and consistent response between each correlated entity.

As shown, FIG. 5 includes a series of acts 500 performed by the model bias removal system 210. The series of acts 500 begins with act 502 of determining a number of counterpart entities based on the classification type. In various implementations, the model bias removal system 210 determines how many counterpart entities should be included as counterpart entity inputs in the meta-prompt. While having more inputs is likely to assist the generative AI model in removing or reducing inconsistency bias in generative responses, each additional input may result in increased computational costs. Accordingly, when multiple counterpart entities are identified for a target entity, the model bias removal system 210 can determine how many of the counterpart entities should be used to generate counterpart entity inputs.

In various implementations, the model bias removal system 210 determines the number of counterpart entities to use based on the class or attribute of the target entity. For example, for target entities in one class, the model bias removal system 210 may determine that one counterpart entity is sufficient to reduce inconsistency bias, while for target entities in another class, the model bias removal system 210 may determine that three to four counterpart entities are needed. As a non-limiting example, the model bias removal system 210 may determine a single counterpart entity for a gender-based target entity, multiple counterpart entities for a culturally-based target entity, two counterpart entities for a race-based target entity, and three counterpart entities for a politician-based target entity.

In some implementations, the model bias removal system 210 may select one or more additional counterpart entities to include in the meta-prompt based on whether the counterpart entity was randomly selected from the mapping table, as described above. For example, if multiple counterpart entities were selected with at least one of them being selected randomly, the model bias removal system 210 can determine to include two or more counterpart entities in the meta-prompt to ensure a fair representation of the attribute or class associated with the target entity.

In one or more implementations, the model bias removal system 210 may limit the number of counterpart entities selected for the meta-prompt based on a maximum input threshold. For example, to maintain lower computational costs and real-time processing, the model bias removal system 210 limits or restricts the number of included counterpart entities to three or fewer.

Act 504 includes generating counterpart entity inputs based on the user prompt and the counterpart entities. For instance, the model bias removal system 210 generates an analogous prompt to the user prompt with the counterpart entity replacing of the target entity. For example, for a user prompt of "Why should I vote for Politician A?" and a counterpart entity of Politician B, the model bias removal system 210 generates a counterpart entity input of "Why should I vote for Politician B?". If additional counterpart entities are determined to be included in the meta-prompt, the model bias removal system 210 may likewise generate corresponding counterpart entity inputs for the meta-prompt.

Act 506 includes generating a meta-prompt to accompany the user prompt to the generative AI model. In various implementations, the model bias removal system 210 generates a meta-prompt 510 (or system prompt) that includes the counterpart entity input to provide to the generative AI model. In addition to the counterpart entity input, the meta-prompt 510 also includes inconsistency bias instructions.

In one or more implementations, the inconsistency bias instructions include consideration directions and a processing purpose indication. For example, the consideration directions instruct the generative AI model to consider or "think" about the user prompt in light of the counterpart entity input. For instance, the consideration directions precede the counterpart entity input and state "You must maintain consistency by thinking of another version of the user message:".

Notably, in the consideration directions, the model bias removal system 210 does not instruct the generative AI model to answer the counterpart entity input but rather only considers the possibility that the generative AI model would exhibit an inconsistency bias when answering the target entity but for the model bias removal system 210 providing a broader context for the model to consider. Furthermore, the consideration directions are written in a manner that influences the response to the user prompt without changing the original question from the user.

As mentioned above, the meta-prompt 510 includes the processing purpose indication. In various implementations, the processing purpose indication informs the generative AI model why the instructions for addressing inconsistency bias and the counterpart entity input are relevant to the user prompt. In some implementations, the meta-prompt does not include the processing purpose indication.

In some implementations, the model bias removal system 210 customizes the processing purpose indication based on the target entity, counterpart entity, and/or class. For example, the processing purpose indication states, "This is to ensure my responses are consistent and fair between the two entities '<<target_entity>>' and '<<counterpart_entity>>'", where the number of entities and the entity names match corresponding information. By doing so, the model bias removal system 210 further emphasizes the need to remove inconsistency biases when responding to the user prompt. In various instances, the processing purpose indication is not customized but rather broadly covers most situations where inconsistency bias instructions and the counterpart entity input are being provided to the generative AI model.

In various implementations, the meta-prompt 510 provides a collection of directions and examples for informing the generative AI model of potential inconsistency bias when answering a user prompt as well as how to remove or mitigate the inconsistency bias while still accurately answering the prompt. By doing so, the model bias removal system 210 can cause the generative AI model to reduce inconsistency bias for the target entity with minimal influence on other aspects of generating the user response by the generative AI model.

Furthermore, the model bias removal system 210 influences the model in the direction of removing or reducing inconsistency bias in generative responses without trying to oversize or change the model's process in responding to the user input. For example, if the user prompt was a factual question, such as a question involving the age of a religious leader, the directions in the meta-prompt would allow the generative AI model to consider and downplay any included counterpart entity inputs. Indeed, the meta-prompt allows the generative AI model to provide accurate and fair answers without degrading response quality.

In one or more implementations, the model bias removal system 210 determines that the user prompt includes two or more target entities. When a user prompt includes multiple target entities, the model bias removal system 210 may include at least one counterpart entity input for each. For example, for the user prompt "What do men think about Party A?", the model bias removal system 210 identifies "men" and "Party A" as target entities and determines "women" and "Party B" as counterpart entities, respectively. In this example, the model bias removal system 210 generates a first counterpart entity input of "What do women think about Party A?" and a second counterpart entity input of "What do men think about Party B?". In some implementations, the model bias removal system 210 generates additional counterpart entity inputs that include combinations of different counterpart entities (e.g., "What do women think about Party B?").

Act 508 includes providing the meta-prompt to the generative AI model with the user prompt. For instance, the model bias removal system 210 provides the user prompt and the meta-prompt to the generative AI model. In particular, the generative AI model considers the meta-prompt with the inconsistency bias instructions and the counterpart entity input, then processes and answers the user prompt with consistency between the counterpart entities. In some implementations, by providing the meta-prompt, the model bias removal system 210 allows the generative AI model to answer user responses it would otherwise block or turn away.

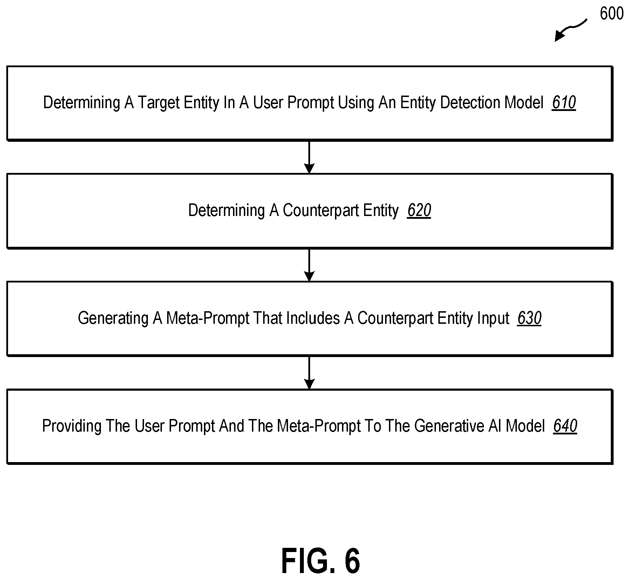

Turning now to FIG. 6, this figure illustrates an example series of acts of a computer-implemented method for removing or reducing inconsistency bias from one or more generative artificial intelligence (AI) model responses according to some implementations. While FIG. 6 illustrates acts according to one or more implementations, alternative implementations may omit, add to, reorder, and/or modify any of the acts shown.

The acts in FIG. 6 can be performed as part of a method (e.g., a computer-implemented method). Alternatively, a computer-readable medium can include instructions that, when executed by a processing system with a processor, cause a computing device to perform the acts in FIG. 6. In some implementations, a system (e.g., a processing system comprising a processor) can perform the acts in FIG. 6. For example, the system includes a processing system and a computer memory including instructions that, when executed by the processing system, cause the system to perform various actions or steps.

As shown, the series of acts 600 includes act 610 of determining a target entity in a user prompt using an entity detection model. For instance, in example implementations, act 610 involves determining a target entity in a user prompt using an entity detection machine learning model based on detecting a user prompt for a generative AI model. In one or more implementations, act 610 involves determining a target entity with an entity classification in the user prompt using an entity detection machine learning model trained to detect and classify target entities within user input based on detecting a user prompt for a generative AI model.

In one or more implementations, act 610 includes utilizing the generative AI model to generate a labeled training dataset for training the entity detection machine learning model in a supervised manner for a set of target entities. In some implementations, the entity detection machine learning model identifies the target entity and a target classification corresponding to the target entity. In some implementations, determining the target entity in the user prompt includes determining the target entity based on a semantic similarity to the target entity within a set of target entities. In some implementations, the entity detection machine learning model includes a transformer neural network architecture used to classify one or more tokens within the user prompt as target entities.

In some implementations, act 610 includes detecting an additional user prompt for the generative AI model; before providing the additional user prompt to the generative AI model, determining that the additional user prompt for the generative AI model does not include one or more target entities associated with a set of target entities; and based on not determining the one or more target entities, providing the additional user prompt to the generative AI model without counterpart entity input. In some implementations, the entity detection machine learning model identifies the target entity within 3 milliseconds of receiving the user prompt.

As further shown, the series of acts 600 includes act 620 of determining a counterpart entity. For instance, in example implementations, act 620 involves determining a counterpart entity based on the target entity. In one or more implementations, act 620 involves determining a counterpart entity within a mapping table based on mapping the target entity and the entity classification to the counterpart entity.

In some implementations, determining the counterpart entity based on the target entity includes using the target entity as an index within a mapping table to identify the counterpart entity corresponding to the target entity and a classification of the target entity. In various implementations, determining the counterpart entity based on the target entity includes failing to identify the target entity within a mapping table and randomly selecting the counterpart entity from counterpart entities in the mapping table having the same classification type as the target entity. In some implementations, randomly selecting the counterpart entity from the counterpart entities in the mapping table includes randomly selecting multiple counterpart entities for the target entity, with the multiple counterpart entities being selected from different attribute groups.

In some implementations, act 620 includes determining a classification type for the target entity and, based on the classification type, determining the number of counterpart entities to select for the target entity. In some instances, a first classification type indicates implementing a first number of counterpart entities, and/or a second classification type indicates implementing a second number of counterpart entities that is larger than the first number of counterpart entities.

As further shown, the series of acts 600 includes act 630 of generating a meta-prompt that includes a counterpart entity input. For instance, in example implementations, act 630 involves generating a meta-prompt that includes inconsistency bias instructions and a counterpart entity input based on the counterpart entity.

In various implementations, generating the meta-prompt includes generating only a single counterpart entity input based on the counterpart entity for the meta-prompt. In some instances, generating the meta-prompt includes generating multiple counterpart entity inputs based on identifying multiple counterpart entities for the target entity. In various implementations, the inconsistency bias instructions include directions for the generative AI model to consider the counterpart entity input and indicate that considering the counterpart entity input when processing the user prompt improves response consistency between the target entity and the counterpart entity.

In one or more implementations, act 630 includes determining multiple target entities within the user prompt, where generating the meta-prompt includes generating at least one counterpart entity input for each of the multiple target entities. In some instances, the meta-prompt is generated and provided to the generative AI model within 250 milliseconds when the target entity is determined in the user prompt.

As further shown, the series of acts 600 includes act 640 of providing the user prompt and the meta-prompt to a generative AI model. For instance, in example implementations, act 640 involves providing the user prompt and the meta-prompt with the counterpart entity input to the generative AI model. In some instances, the meta-prompt with the inconsistency bias instructions causes the generative AI model to reduce inconsistency bias with respect to the target entity with minimal influence on other aspects of generating a user response by the generative AI model.

FIG. 7 illustrates certain components that may be included within a computer system 700. The computer system 700 may be used to implement the various computing devices, components, and systems described herein (e.g., by performing computer-implemented instructions). As used herein, a "computing device" refers to electronic components that perform a set of operations based on a set of programmed instructions. Computing devices include groups of electronic components, client devices, server devices, etc.

In various implementations, the computer system 700 represents one or more of the client devices, server devices, or other computing devices described above. For example, the computer system 700 may refer to various types of network devices capable of accessing data on a network, a cloud computing system, or another system. For instance, a client device may refer to a mobile device such as a mobile telephone, a smartphone, a personal digital assistant (PDA), a tablet, a laptop, or a wearable computing device (e.g., a headset or smartwatch). A client device may also refer to a non-mobile device such as a desktop computer, a server node (e.g., from another cloud computing system), or another non-portable device.

The computer system 700 includes a processing system including a processor 701. The processor 701 may be a general-purpose single- or multi-chip microprocessor (e.g., an Advanced Reduced Instruction Set Computer (RISC) Machine (ARM)), a special-purpose microprocessor (e.g., a digital signal processor (DSP)), a microcontroller, a programmable gate array, etc. The processor 701 may be referred to as a central processing unit (CPU) and may cause computer-implemented instructions to be performed. Although the processor 701 shown is just a single processor in the computer system 700 of FIG. 7, in an alternative configuration, a combination of processors (e.g., an ARM and DSP) could be used.

The computer system 700 also includes memory 703 in electronic communication with the processor 701. The memory 703 may be any electronic component capable of storing electronic information. For example, the memory 703 may be embodied as random-access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM), registers, and so forth, including combinations thereof.

The instructions 705 and the data 707 may be stored in the memory 703. The instructions 705 may be executable by the processor 701 to implement some or all of the functionality disclosed herein. Executing the instructions 705 may involve the use of the data 707 stored in the memory 703. Any of the various examples of modules and components described herein may be implemented, partially or wholly, as instructions 705 stored in memory 703 and executed by the processor 701. Any of the various examples of data described herein may be among the data 707 stored in memory 703 and used during the execution of the instructions 705 by the processor 701.

A computer system 700 may also include one or more communication interface(s) 709 for communicating with other electronic devices. The one or more communication interface(s) 709 may be based on wired communication technology, wireless communication technology, or both. Some examples of the one or more communication interface(s) 709 include a Universal Serial Bus (USB), an Ethernet adapter, a wireless adapter that operates according to an Institute of Electrical and Electronics Engineers (IEEE) 802.11 wireless communication protocol, a Bluetooth^{®} wireless communication adapter, and an infrared (IR) communication port.

A computer system 700 may also include one or more input device(s) 711 and one or more output device(s) 713. Some examples of the one or more input device(s) 711 include a keyboard, mouse, microphone, remote control device, button, joystick, trackball, touchpad, and light pen. Some examples of the one or more output device(s) 713 include a speaker and a printer. A specific type of output device that is typically included in a computer system 700 is a display device 715. The display device 715 used with implementations disclosed herein may utilize any suitable image projection technology, such as liquid crystal display (LCD), light-emitting diode (LED), gas plasma, electroluminescence, or the like. A display controller 717 may also be provided to convert data 707 stored in the memory 703 into text, graphics, and/or moving images (as appropriate) shown on the display device 715.

The various components of the computer system 700 may be coupled together by one or more buses, which may include a power bus, a control signal bus, a status signal bus, a data bus, etc. For clarity, the various buses are illustrated in FIG. 7 as a bus system 719.

This disclosure describes a subjective data application system within the framework of a network. In this disclosure, a "network" refers to one or more data links that enable electronic data transport between computer systems, modules, and other electronic devices. A network may include public networks such as the Internet as well as private networks. When information is transferred or provided over a network or another communication connection (either hardwired, wireless, or both), the computer correctly views the connection as a transmission medium. Transmission media can include a network and/or data links that carry the required program code in the form of computer-executable instructions or data structures, which can be accessed by a general-purpose or special-purpose computer.

In addition, the network described herein may represent a network or a combination of networks (such as the Internet, a corporate intranet, a virtual private network (VPN), a local area network (LAN), a wireless local area network (WLAN), a cellular network, a wide area network (WAN), a metropolitan area network (MAN), or a combination of two or more such networks) over which one or more computing devices may access the various systems described in this disclosure. Indeed, the networks described herein may include one or multiple networks that use one or more communication platforms or technologies for transmitting data. For example, a network may include the Internet or another data link that enables the transportation of electronic data between respective client devices and components (e.g., server devices and/or virtual machines thereon) of the cloud computing system.

Furthermore, upon reaching various computer system components, program code means in the form of computer-executable instructions or data structures can be automatically transferred from transmission media to non-transitory computer-readable storage media (devices), or vice versa. For example, computer-executable instructions or data structures received over a network or data link can be buffered in random-access memory (RAM) within a network interface module (NIC) and then eventually transferred to computer system RAM and/or to less volatile computer storage media (devices) at a computer system. Thus, it should be understood that computer-readable storage media (devices) can be included in computer system components that also (or even primarily) utilize transmission media.

Computer-executable instructions include instructions and data that, when executed by a processor, cause a general-purpose computer, special-purpose computer, or special-purpose processing device to perform a certain function or group of functions. In some implementations, computer-executable and/or computer-implemented instructions are executed by a general-purpose computer to turn the general-purpose computer into a special-purpose computer implementing elements of the disclosure. The computer-executable instructions may include, for example, binaries, intermediate format instructions such as assembly language, or even source code. Although the subject matter has been described in language specific to structural features and/or methodological acts, it is to be understood that the subject matter defined in the appended claims is not necessarily limited to the features or acts described above. Rather, the described features and acts are disclosed as example forms of implementing the claims.

Those skilled in the art will appreciate that the disclosure may be practiced in network computing environments with many types of computer system configurations, including personal computers, desktop computers, laptop computers, message processors, handheld devices, multiprocessor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or a combination of hardwired and wireless data links) through a network, both perform tasks. In a distributed system environment, program modules may be located in both local and remote memory storage devices.

The techniques described herein may be implemented in hardware, software, firmware, or any combination thereof unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium, including instructions that, when executed by at least one processor, perform one or more of the methods described herein (including computer-implemented methods). The instructions may be organized into routines, programs, objects, components, data structures, etc., which may perform particular tasks and/or implement particular data types, and which may be combined or distributed as desired in various implementations.

Computer-readable media can be any available medium that can be accessed by a general-purpose or special-purpose computer system. Computer-readable media that store computer-executable instructions are non-transitory computer-readable storage media (devices). Computer-readable media that carry computer-executable instructions are transmission media. Thus, by way of example, implementations of the disclosure can include at least two distinctly different kinds of computer-readable media: non-transitory computer-readable storage media (devices) and transmission media.

As used herein, computer-readable storage media (devices) may include RAM, ROM, EEPROM, CD-ROM, solid-state drives (SSDs) (e.g., based on RAM), Flash memory, phase-change memory (PCM), other types of memory, other optical disk storage, magnetic disk storage, or other magnetic storage devices, or any other medium that can be used to store desired program code means in the form of computer-executable instructions or data structures and that can be accessed by a general-purpose or special-purpose computer.

The steps and/or actions of the methods described herein may be interchanged with one another without departing from the scope of the claims. In other words, unless a specific order of steps or actions is required for the proper operation of the method being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a data repository, or another data structure), ascertaining, and the like. Also, "determining" can include receiving (e.g., receiving information), accessing (e.g., accessing data in memory), and the like. Also, "determining" can include resolving, selecting, choosing, establishing, and the like.

The terms "comprising," "including," and "having" are intended to be inclusive and mean that there may be additional elements other than the listed elements. Additionally, it should be understood that references to "one implementation" or "implementations" of the present disclosure are not intended to be interpreted as excluding the existence of additional implementations that also incorporate the recited features. For example, any element or feature described concerning an implementation herein may be combinable with any element or feature of any other implementation described herein, where compatible.

The present disclosure may be embodied in other specific forms without departing from its spirit or characteristics. The described implementations are to be considered illustrative and not restrictive. The scope of the disclosure is indicated by the appended claims rather than by the foregoing description. Changes that come within the meaning and range of equivalency of the claims are to be embraced within their scope.

## Claims

1. A computer-implemented method for reducing inconsistency bias from one or more generative artificial intelligence, AI, model responses, comprising:
based on detecting a user prompt for a generative AI model, determining a target entity in the user prompt using an entity detection machine learning model;
determining a counterpart entity based on the target entity;
generating a meta-prompt that includes inconsistency bias instructions and a counterpart entity input based on the counterpart entity; and
providing the user prompt and the meta-prompt to the generative AI model.

2. The computer-implemented method of claim 1, wherein the meta-prompt with the inconsistency bias instructions causes the generative AI model to reduce an inconsistency bias with respect to the target entity with minimal influence on other aspects of generating a user response by the generative AI model; or
wherein the entity detection machine learning model identifies the target entity and a target classification corresponding to the target entity; or
wherein determining the target entity in the user prompt includes determining the target entity based on a semantic similarity to the target entity within a set of target entities.

3. The computer-implemented method of claim 1, further comprising one of the following:
(i) utilizing the generative AI model to generate a labeled training dataset for training the entity detection machine learning model in a supervised manner for a set of target entities; or
(ii) detecting an additional user prompt for the generative AI model;
before providing the additional user prompt to the generative AI model, determining that the additional user prompt for the generative AI model does not include one or more target entities associated with a set of target entities; and
based on not determining the one or more target entities, providing the additional user prompt to the generative AI model without counterpart entity input.

4. The computer-implemented method of claim 1, wherein determining the counterpart entity based on the target entity includes using the target entity as an index within a mapping table to identify the counterpart entity corresponding to the target entity and a classification of the target entity.

5. The computer-implemented method of claim 1, wherein determining the counterpart entity based on the target entity includes:
failing to identify the target entity within a mapping table; and
randomly selecting the counterpart entity from counterpart entities in the mapping table having a same classification type as the target entity.

6. The computer-implemented method of claim 5, wherein randomly selecting the counterpart entity from the counterpart entities in the mapping table includes randomly selecting multiple counterpart entities for the target entity, the multiple counterpart entities being selected from different attribute groups.

7. The computer-implemented method of claim 1, further comprising:
determining a classification type for the target entity; and
based on the classification type, determining a number of counterpart entities to select for the target entity.

8. The computer-implemented method of claim 7, wherein:
a first classification type indicates implementing a first number of counterpart entities; and
a second classification type indicates implementing a second number of counterpart entities that is larger than the first number of counterpart entities.

9. The computer-implemented method of claim 8, wherein generating the meta-prompt includes one of:
(i) generating only a single counterpart entity input based on the counterpart entity for the meta-prompt; or
(ii) generating multiple counterpart entity inputs based on identifying multiple counterpart entities for the target entity.

10. The computer-implemented method of claim 1, wherein the inconsistency bias instructions include:
directions for the generative AI model to consider the counterpart entity input; and
an indication that considering the counterpart entity input when processing the user prompt improves response consistency between the target entity and the counterpart entity.

11. A system comprising:
a processing system having a processor; and
a computer memory including instructions that, when executed by the processing system, cause the system to carry out operations comprising:
based on detecting a user prompt for a generative AI model, determining a target entity with an entity classification in the user prompt using an entity detection machine learning model;
determining a counterpart entity based on the target entity and the entity classification;
generating a meta-prompt that includes inconsistency bias instructions and a counterpart entity input based on the counterpart entity; and
providing the user prompt and the meta-prompt to the generative AI model.

12. The system of claim 11, wherein the entity detection machine learning model includes a transformer neural network architecture used to classify one or more tokens within the user prompt as target entities.

13. The system of claim 11, further comprising determining multiple target entities within the user prompt, wherein generating the meta-prompt includes generating at least one counterpart entity input for each of the multiple target entities.

14. A computer-implemented method for reducing inconsistency bias from one or more generative artificial intelligence, AI, model responses, comprising:
based on detecting a user prompt for a generative AI model, determining a target entity with an entity classification in the user prompt using an entity detection machine learning model trained to detect and classify target entities within user input;
determining a counterpart entity within a mapping table based on mapping the target entity and the entity classification to the counterpart entity;
generating a meta-prompt that includes a counterpart entity input and inconsistency bias instructions based on the counterpart entity; and
providing the user prompt and the meta-prompt to the generative AI model.

15. The computer-implemented method of claim 14, wherein the entity detection machine learning model identifies the target entity within 3 milliseconds of receiving the user prompt; or
wherein the meta-prompt is generated and provided to the generative AI model within 250 milliseconds when the target entity is determined in the user prompt.
